# EUROPEAN PATENT SPECIFICATION

(11) **EP 0 787 576 B1**
(45) Date of publication and mention of the grant of the patent: **07.11.2001**
(21) Application number: 97830017.6
(22) Date of filing: 24.01.1997
(51) Int. Cl.: B29D 31/00, F16J 15/00, B60J 10/00

(54) **A method for the application and modelling of seal elements in a material extruded onto the surfaces of flat or curved sheets, and an apparatus suitable to carry out said method**
Verfahren zum Auftragen und Modellieren von aus einem extrudierten Grundstoff-Dichtungselementen auf die Oberflächen ebener oder gekrümmter Schichten, und Vorrichtung zum Ausführen dieses Verfahrens
Procédé pour l'application et modellisation des éléments d'étanchéité dans un matériau extrudé sur la surface des feuilles plates ou courbées, et dispositif pour l'exécution de ce procédé

(30) Priority: 25.01.1996 IT RM960048
(43) Date of publication of application: 06.08.1997
(73) Proprietor: TAI - TECNOLOGIA AUTOMAZIONE INNOVAZIONE - SOCIETA PER AZIONI, I-00040 Pomezia RM (IT)
(72) Inventor: Chines, Giuseppe, 00197 Rome (IT); Cecchi, Luciano, 00151 Rome (IT)
(74) Representative: Leone, Mario

(56) References cited:
- EP-A- 0 421 833
- EP-A- 0 479 677
- DE-A- 4 433 749
- GB-A- 2 285 277
- GB-A- 2 302 360
- US-A- 4 581 276
- US-A- 5 358 397

## Description

The present invention relates to a method and an apparatus for applying and modelling portions of seal members, obtained by extrusion of a viscous fluid along the perimeter and/or on the inside of the surface of a sheet, when said seal members, either upon being laid or in any case before polymerisation thereof has taken place, are still in a viscous state that allows them to be modelled in shape.

Among the methods used to fit seal members along the perimeter and/or on the inside of flat or curved sheets, the one involving deposit of a seal strip by means of direct extrusion of a viscous fluid onto the sheet has a number of advantages with respect to other direct fitting methods (injection moulding, commonly known as RIM) or the classical indirect method consisting in the separate manufacture of the seal member and its installation on the sheet with the aid of mechanical and/or chemical means (gluing). In the glass industry, the latter method has been in use for a number of years to fit seals on the perimeter and sometimes on the inside of the surfaces of fixed window members for motor vehicles, such as sunroofs, windscreens and side windows.

For example, in GB 2285277 A is disclosed a method and an apparatus suitable for automatically attaching an extruded mold of a thermoplastic material onto the peripheral edge of a glazing.

The seal member can have an extremely complex cross-section, which generally varies from one model of window to another and can sometimes vary along the perimeter of a single window, and it has the aim of allowing the window, which generally has a three-dimensionally curved outline, to be fixed to the bodywork of the vehicle. Furthermore, the seal member constitute the contact member between the glass and the bodywork, and has the function of limiting the area on which the adhesive is applied, for both functional and aesthetic reasons, and it creates a seal between the inside of the vehicle and the atmospheric agents on the outside.

In such applications in the glass industry, the material preferably used to form the seal member generally is a single-component polyurethane pre-polymer, which has a high level of viscosity upon extrusion and a distinct tendency to adhere to almost all materials with which it comes into contact. The fluid is extruded through special nozzles, shaped according to the cross-section of the profile to be obtained, by means of complex pumping and metering systems that allow the flow rate of the material to be adjusted according to the typical parameters of the application (shape of the section, temperature and pressure of the fluid, laying-on speed, etc.). The end part of the extrusion system, comprising the regulation system and the extrusion nozzle, is generally installed aboard a programmable manipulating device (industrial robot), which allows the nozzle to be moved along controlled and programmable trajectories and at programmed speeds to deposit the seal member along the edge of the glass or, if required, on the inside thereof.

For instance in EP 0421833 A2 is disclosed a process and an apparatus as above described, for the extruding of a polymerising mold onto the peripheral edge of a glazing.

However, although there are a series of advantages given by the abovementioned application of this method with respect to those methods offered by competitors, which substantially gives greater economy of production, there is a problem that to date has not found any fully satisfactory solution, and which the present invention intends to solve in a suitable manner for industrial applications: the seal member can only be deposited along a route that follows the edge of the sheet of glass, then closed onto itself to form a ring.

Therefore, an object of the present invention is to provide a method for applying and modelling seal members constituted of extruded material onto surfaces of flat or curved sheets, characterised in that it comprises the following steps:
positioning a sheet to be fitted with a seal member in proximity to a seal member extruding device;
positioning said extruding device over the sheet;
extruding a seal member of polymerising material and continuously depositing it on the portion of the sheet that has to be sealed therewith;
cutting said seal member of extruded material following the extrusion thereof and before it is deposited on the sheet, and in any case before polymerisation thereof, using cutting means; and
joining and rendering integral with each other the respective initial and final ends of the extruded seal member, so that one abuts with the other and using modelling means.

Furthermore, another object of the present invention is to provide an apparatus for such method as defined in claim 5.

The method according to the present invention and the apparatus for such method will be illustrated in the following by a description of a preferred embodiment thereof, given as a non-limiting example, and with reference to the enclosed drawings, wherein:
figure 1 is a partial perspective view of the apparatus, according to the present invention;
figure 2 is a schematic view partially showing three examples of embodiment of seal members according to the state of the art;
figure 3 is a schematic front plan view illustrating a known arrangement of a seal member on a generic sheet;
figure 4 is a partial schematic view showing a portion of the apparatus according to the present invention;
figure 5 is a partial schematic view showing a portion of the apparatus according to the present invention;
figure 6 is a partial schematic view showing a portion of the apparatus according to the present invention;
figure 7 is a partial schematic view showing a portion of the apparatus according to the present invention;
figure 8 is a partial schematic view showing in detail a portion of the apparatus according to the present invention; and
figure 9 is a partial schematic view showing in detail a portion of the apparatus according to the present invention.

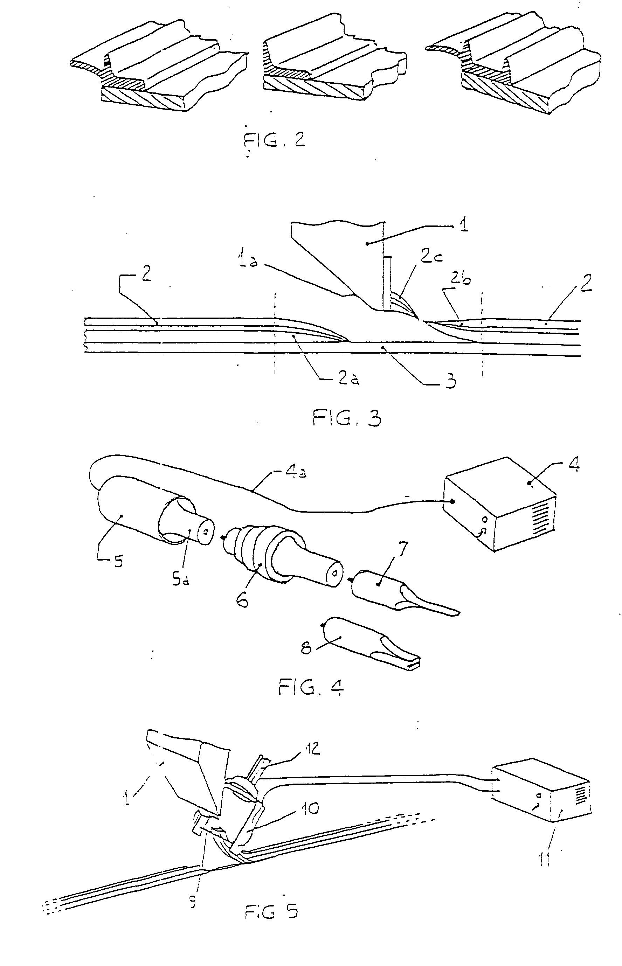

As in figure 3, the extrusion can start from any point on the edge of the sheet, generally along a straight section, and continues along said edge by movement of the nozzle (1) along a programmed trajectory until the extruded seal member is abutted with the initial section at the point in which deposit commenced: actually, due to the small but not negligible dimensions of the nozzle (1), the extrusion operation must necessarily terminate before the extruded material reaches the starting section, in order to avoid the front wall of the nozzle (1a) abuts with said starting section. The movement of the nozzle (1) is deviated upwards and this causes the extruded member to be stretched until it breaks, part of the member remaining integral with the nozzle (1): this deformed residual portion of seal member (2c) will form the starting section of the subsequent seal member.

Consequently, at the end of the operation, the seal member deposited on the sheet of glass, at the area wherein joining of the starting section and the final section of the extruded member (2) has to take place, is as shown in figure 3, wherein there can be seen a partially deformed seal member (2a) deposited during the starting of extrusion, a portion (2b) of the seal member also partially deformed and deposited upon completion of extrusion, a residual portion of deformed seal member (2c) integral with the nozzle (1) and a portion of the sheet of glass (3) on which the seal member is missing, as the extrusion operation has been stopped before the nozzle touches the starting section (2a).

In actual operating practice this problem is overcome by means of long and expensive operations, carried out subsequently to the extrusion operation. These subsequent operations are carried out almost totally by hand, with results that are at times rather unsatisfactory, if not from a functional point of view at least from an aesthetic one, aiming to completing the joint between the two ends of the seal member. For example, it is possible to proceed as follows: first of all the extruded member is allowed to polymerise for 24 hours, then a sharp tool is used to remove two sections, one from each end, with the dual purpose of eliminating the areas of the seal member with a more or less deformed section and to unify them along the length of the missing section of profile.

At this point it is necessary to complete the missing section of seal member: according to a known method, straight connection seals are prepared in advance and, after polymerisation, are cut to the same length as the section missing on the sheet of glass. A section of seal member is then applied in the missing space, gluing it to the sheet of glass and at the two ends of the seal member. According to an alternative method, after working the ends of the seal member in the abovementioned manner, the sheet of glass is then inserted into an open mould having a cavity with the same shape of the seal member in section: as the mould is closed it creates a closed space on the surfaces of the glass sheet and at the ends of the seal member. Then, more fluid is injected into the mould, said fluid having generally different characteristics to those of the extruded member, until the mould is filled; then follows a thermal pre-polymerisation cycle, at the end of which the mould can be opened, thanks also to the use of detaching substances, and the polymerisation of the product can be completed over the following hours. Often the polymerised product must be further worked in order to eliminate the typical manufacturing faults (removal of moulding burrs, grinding of the surfaces on the overlapped section, etc.). If the additional operations required by these methods (intermediate movement and storage of semi-finished products for a number of hours, cleaning moulds and the like) are taken into account, it will easily be seen that the heavy cost of manpower and equipment, the high level of waste, the low quality of the finished product and the length of working cycles do not combine well with the needs of a large scale industrial production, which is required by this type of product.

The present invention consists of a method and an apparatus apt to join the starting portion and the final portion of a seal member upon ending the extruding operation thereof, without making the product undergo pre-polymerisation and using apparatuses that can be integral with the extruding apparatus itself, or at least in the same workstation wherein this operation is carried out, in order to avoid any intermediate accumulation of sheets of glass and to eliminate any waiting of time. The method further eliminates any manual operations, as such operations can be carried out automatically, and therefore in a repetitive, rapid and economic manner, and eventually using the same industrial robot that is employed for extrusion, with the aid of other automatically operating equipment.

The method according to the present invention consists in the use of suitable tools to cut the seal member in a precise manner when leaving the nozzle at the end of the extrusion operation, without deforming its cross-section, and to manipulate and modelling the initial and final sections of the seal member in order to bring them together. The particular features of the above tools, both the cutting tool and the modelling tool, lie in their ability to come into contact with the extruded fluid which, as mentioned above, at this state is highly adhesive for almost all types of material, and to carry out the required operations without the material of the seal member adheres to the tool, which would cause irreparable deformation of the seal member section and would dirty the tool, rendering it useless for subsequent operations.

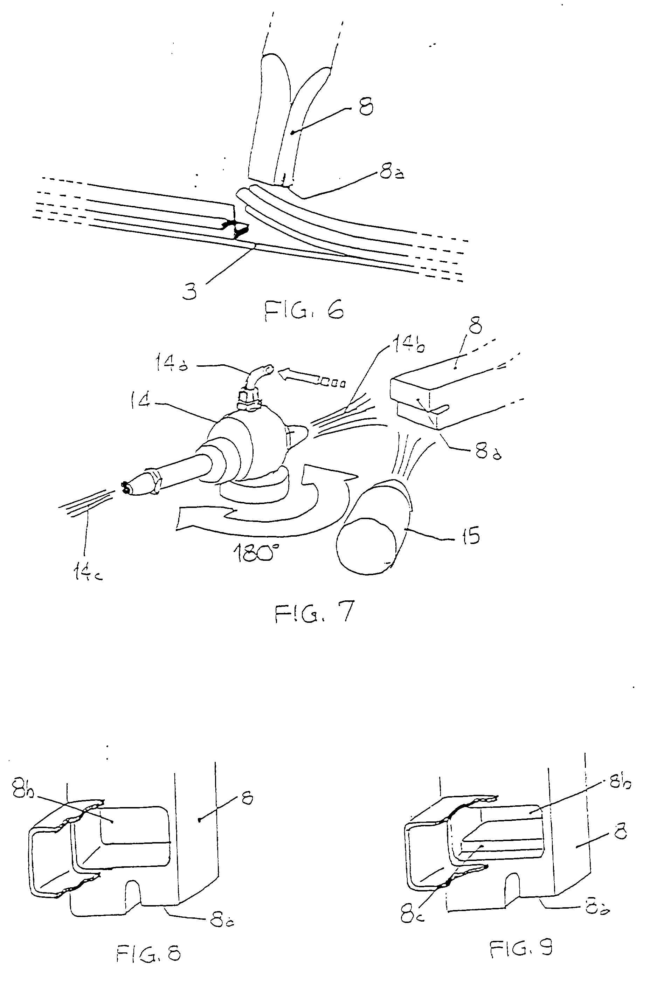

Following to experimental tests carried out by the inventor, three different methodologies have been identified, tested and improved in order to prevent adhesion of the extruded fluid onto the tool: a first methodology can be applied both to the cutting tool and to the modelling tool, a second methodology only to the cutting tool along and a third methodology only to the modelling tool. The first methodology consists in oscillating the tool at ultrasonic frequencies on the range of some 1*10⁺¹ kHz and with amplitudes in the range of a few dozen of µ-meters. Figure 4 illustrates a scheme of an apparatus for the generation, application and amplification of oscillations in a cutting tool; the generator (4) is an electronic device, consisting of an oscillator, a number of amplification stages and auxiliary control circuits, apt to generate an electric frequency signal equal to the desired oscillation frequency of the tool and at a required power (in the order of a hundred Watts); the transducer (5), connected to the generator (4) by means of the cable (4a), transforms the electric signal into mechanical vibration of a shaft (5a); to the shaft (5a) it is possible, when this is advantageous for the application, to apply a mechanical oscillation amplitude amplifier (6), commonly known as a "booster", apt to amplify the axial vibrations of the shaft by 2x, 3x or similar values according to the design of the amplifier itself; finally, either on the booster (6) or directly on the shaft (5a) of the transducer (5), a tool (7) is screwed, which is shown in the figure as a cutting tool but, as already mentioned above, may also be a modelling tool (8). The oscillations caused onto the tool (7,8) by the generating system (4) by means of the transducer (5) and optionally by the amplifier (6), allow the tool to come into contact with the viscous fluid which forms the seal member, either to cut it or modelling it, without the latter adheres to the surface of the tool: this is possible thanks to the extremely high accelerations transmitted to the material by means of the vibration of the tool's surface at the moment of mutual contact.

In order to cut the material it is possible to use a different methodology, illustrated in the figure 5, as a non-limiting example. In this case, the cutting tool consists of an extremely thin metal wire (9), held taut by a bow (10), therewith a low-voltage electric generator (11) is connected and apt to circulate in the wire an electric current such to heat the wire to a temperature of around 60ö100 °C. The tool, which is moved by a mobile member (12), is not illustrated in greater detail in the figure as it can constitute the end portion of a pneumatically or electrically controlled device and positioned close to the extruding nozzle (1) and integral with the latter, cuts with the wire (9) cleanly the seal leaving the nozzle: the motion of the cutting tool is started at the end of the extruding step, after the nozzle has lifted from the surface of the glass sheet as an effect of the trajectory specially programmed by the nozzle moving system. Both parts of the extruded seal member, the one at the end of the extruded seal member and the one that remains integral with the nozzle, are cut cleanly and do not suffer any appreciable deformation.

Since the end portion of the seal member that remains integral with the nozzle forms the starting portion of the subsequent seal member to be deposited, once the process has been started up in a continuous manner, both ends of the seal member will have cleanly cut end sections showing no deformation, and therefore apt to form, when joined together, a continuous portion of seal member as a member joined to form a ring.

Once the seal member has been cut upon ending the extruding process, whether with a vibrating blade tool (7) or with a device equipped with a heated wire (9), the end section of the seal member, due to the high viscosity of the fluid, remains raised above the sheet of glass and detached from the starting section of the seal member , as in figure 6. The modelling tool (8), fitted in proximity to the extruding nozzle and integral therewith, narrows toward the sheet of glass (3) and forces the raised end section of the seal member to narrow toward the sheet of glass, occupying therefore the empty space left and togethering with the starting portion of the seal member. The pressure exerted by the shaped front surface (8a) of the modelling tool (8) against the two ends of the seal member allows the material of said two ends to be redistributed in order to create a continuous joint between said two ends: as in the abovementioned cutting step, the accelerations imposed to the fluid by the vibrating surface of the tool prevents the material from adhering to the tool.

An alternative method of avoiding adhesion between the modelling tool and the material forming the joint consists in coating the portion of the surface of the tool (8a) to come into contact with the viscous fluid, with a thin layer of solidified fluid material, e.g. ice: it is experimentally proved that on contacting the fluid, the layer coating the tool melts and releases a film of liquid, i.e. water, which is distributed on the surface of the seal member and causes immediate polymerisation of the fluid, with a consequent solidification of its most external surface layer and with a loss of adhesion.

An apparatus for coating the surface of the modelling tool with ice is illustrated as a non-limiting example in figure 7. During a period of inactivity, the surface of the nozzle (8a) is cooled by a flow of air or other gaseous fluid (14b) at a temperature greatly below 0°C, so as to bring the temperature of the surface (8a) below said temperature: the flow of cold air (14b) is produced by a generator (14) which, in a preferred embodiment, is of the type commercially known as a "vortex" generator, supplied by a flow of compressed air (14a) which, thanks to the thermodynamic effect typical of ultra-sonic speed flows, gives simultaneous cooling of the flow (14b) and heating of the flow (14c) leaving in the opposite direction; immediately before the modelling step, cooling of the surface (8a) is stopped, and the latter is misted with a spray of water coming from a compressed air spray gun (15). Alternatively, the cold air generator can be provided by means of an air/Freon heat exchanger or another one using other fluid cooled by an external refrigerator group.

In other embodiments, cooling of the tool's surface from the inside thereof may be provided, as in figure 8: in this case the body of the modelling tool (8) is crossed by a refrigerating fluid flowing inside channels (8b) laid close to the surface (8a). Finally, it is possible to embody the tool in the form as illustrated in figure 9, wherein at the inside of the tool (8) and close to the outer surface (8a) thereof, a Peltier-type heat exchanger (8c) is installed, the cold side of the exchanger facing towards the surface (8a) and the hot side forming one wall of a cavity (8b) through which a cooling fluid (compressed air, water or refrigerating fluid) is made to flow and being supplied by a cooling system outside the apparatus.

All the cooling systems of the tool surface (8a) allow the layer of solidified fluid to be restored after one or more modelling steps, merely by heating the surface itself: in the case of the "Vortex" system, by means of a 180° rotation of the generator (14), it is possible to direct the jet of hot air (14c) onto the surface, while in the case of internal heating of the surface a heating fluid will be send into the channels (8b) in place of the cooling one by exchanging the necessary hydraulic circuits and, finally in the case of the Peltier heat exchanger (8c) it is sufficient to invert the polarity of the power supply and consequently the direction of the electric current circulating in the cell to invert the cold side of the cell with the hot one. Restoration of the iced layer can also be useful in order to clean the surface (8a).

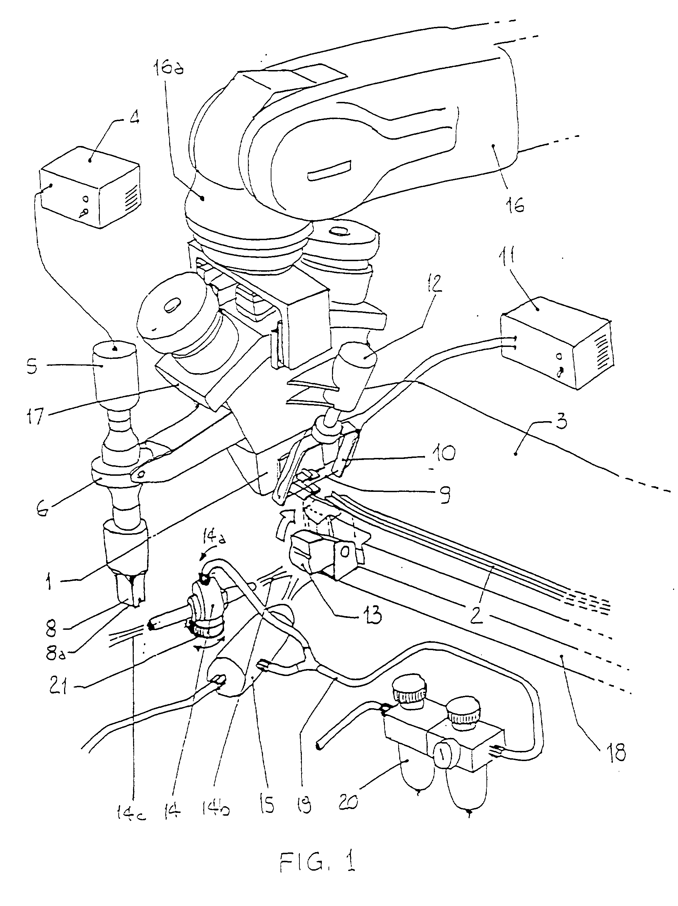

Figure 1 shows a non-limiting example of an overall plan of the apparatus to carry out the method according to the present invention. From the figure the apparatus is as indicated: the end (16a) of the mobile arm of an industrial robot (16) carrying an extruding device (17), at the bottom end thereof a sealing member (2) with a lip cross section, e.g. as those shown in figure 2, is extruded from a nozzle (1), onto a curved sheet of glass (3); integral with the nozzle (1) a device (12) is installed, apt to move a cutting wire (9) held taut by the bow (10) and powered by the generator (11); a modelling tool (8) is screwed onto the vibrations amplifier (6), which is in turn screwed to the transducer (5), integral with the nozzle (1) and powered by the high frequency signals generator (4); a second modelling tool (13) is integral with the working support (18) for the sheet of glass (3) and, at the position shown by a solid line is at first cooled by a flow of cold air (14b) produced by the vortex generator (14) which is powered by a flow of compressed air (14a) and subsequently covered by a spray of atomised water from a spray gun (15), the latter being fed with compressed air and water from a distribution network (19) equipped with systems (20) for filtering and adjusting the pressure and the flow rate, whereas in the position shown by a dotted line it forms a supporting surface for the lip of the seal member portion (2) which extends outwardly from the edge of the sheet (3) at the moment in which the modelling tool (8) according to the programmed movement of the robot (16), descends towards the sheet of glass (3) and through the pressure exerted by its lower surface (8a) forces the final portion of the seal member (2) to narrow to the sheet of glass (3) and to join with the starting portion of said seal member; at the end of the operation the second modelling tool (13) can return to the non operative position, shown with a solid line, and wherein if required by operating conditions the generator (14), after completing a 180° rotation of the support mechanism (21), sends a flow of hot air (14c) for melting the layer of ice on the surface of the modelling tool (13).

Although the invention has been described in considerable detail, it is understood that variations and modifications thereto can be made by a person skilled in this field without departing from the scope of the invention itself, as defined in the claims.

## Claims

1. A method for applying and modelling seal members constituted of an extruded material onto surfaces of flat or curved sheets, **characterised in that** it comprises the following steps:
positioning a sheet (3) to be fitted with a seal member in proximity to a seal member extruding device (1, 16);
positioning said extruding device (1, 16) over the sheet (3);
extruding a seal member (2) of polymerising material and continuously depositing it on the portion of the sheet (3) that is to be sealed;
cutting said seal member (2) of extruded material following the extrusion thereof and before it is deposited on the sheet (3) and in any case before polymerisation thereof takes place, using cutting means (5, 6, 7, 9, 10); and
joining and rendering integral with each other the respective initial and final ends of the extruded seal member (2) on the sheet (3), so that one end abuts with the other, using modelling means (8, 13).

2. A method for applying and modelling seal members constituted of an extruded material onto surfaces of flat or curved sheets according to claim 1, wherein said flat or curved sheets (3) are flat or curved windowpanes.

3. A method for applying and modelling seal members constituted of an extruded material onto surfaces of flat or curved sheets according to claim 2, wherein said windowpanes are windowpanes for automobiles.

4. A method for applying and modelling seal members constituted of an extruded material onto surfaces of flat or curved sheets according to at least one of the preceding claims, wherein said extruded seal member (2) is made of at least a single-component polyurethane pre-polymer.

5. Apparatus for applying and modelling seal members constituted of an extruded material onto surfaces of flat or curved sheets, **characterised in that** it comprises:
at least one seal member extruding device for extruding polymerising material (1,16);
means (18) for positioning and supporting the sheet (3) to be fitted with said seal member in proximity to said extruding device;
cutting means (5,6,7,9,10) for cutting said extruded polymerising material following the extrusion thereof and before it is deposited on the sheet (3) and in any case before polymerisation thereof takes place;
modelling means ( 8,13) for joining and rendering integral with each other the respective initial and final ends of the extruded seal member ( 2) on the sheet ( 3), so that one end abuts with the other;
means (14,15,19,20) for the surface conditioning of said modelling means ( 8,13).

6. Apparatus for applying and modelling seal members constituted of an extruded material onto surfaces of flat or curved sheets according to claim 5, wherein said seal member extruding device comprises at least one extrusion nozzle (1) mounted on at least one mechanical robot arm (16).

7. Apparatus for applying and modelling seal members constituted of an extruded material onto surfaces of flat or curved sheets according to claims 5 or 6, wherein said sheet supporting means comprises at least one mobile frame (18) capable of supporting the sheet deposited thereon in a removable manner.

8. Apparatus for applying and modelling seal members constituted of an extruded material onto surfaces of flat or curved sheets according to claims 5-7, wherein said cutting means comprises:
an electric power source (4) ;
a transmitter member (5) for transmitting the power from said source (4), arranged in a removable manner on the mechanical robot arm (16); and
a tool (7) having one end thereof in the shape of a blade and connected to the transmitter member (5) and wherein said cutting means further comprises a mechnical oscillation amplifier (6) connected to said transmitter member (5).

9. Apparatus for applying and modelling seal members constituted of an extruded material onto surfaces of flat or curved sheets according to claim 8, wherein said power source is a generator (4) of amplified oscillating electric signals.

10. Apparatus for applying and modelling seal members constituted of an extruded material onto surfaces of flat or curved sheets according to claims 8, 9 wherein said transmitter (5) is a transducer for transforming the electrical signals from the generator (4) into mechanical vibrations of a shaft (5a) to which it is connected.

11. Apparatus for applying and modelling seal members constituted of an extruded material onto surfaces of flat or curved sheets according to claims 5-7, wherein said cutting means comprises:
a cutting member consisting of a metal wire (9) apt to be heated;
a support member (10) for the supporting of said metal wire;
a power supply (11) connected to said metal wire and apt to heat the metal wire (9); and
a device (12) for moving said support member (10), arranged on said mechanical robot arm (16).

12. Apparatus for applying and modelling seal members constituted of an extruded material onto surfaces of flat or curved sheets according to the preceding claim 11, wherein said power supply is an electrical power source (11).

13. Apparatus for applying and modelling seal members constituted of an extruded material onto surfaces of flat or curved sheets according to claim 11 or 12, wherein said moving device (12) consists of at least one of the following devices:
an electric actuator;
a pneumatic actuator;
an hydraulic actuator.

14. Apparatus for applying and modelling seal members constituted of an extruded material onto surfaces of flat or curved sheets according to any of claims 8 to 13, wherein said modelling means comprises a first tool (8) having a lower surface (8a) with the same shape of the portion of seal member (2) to be modelled and for pressing said portion of seal member (2), said tool (8) being suitable to be connected in a removable manner to the mechanical amplifier (6).

15. Apparatus for applying and modelling seal members constituted of an extruded material onto surfaces of flat or curved sheets according to the preceding claim, wherein said modelling means comprises a second tool (13) having a surface shaped like the outline edge of said seal member (2) and rotationally mounted onto said mobile frame (18), said second tool (13) being apt to press the portion of the seal member (2) to be modelled at the underneath and/or the side thereof while cooperating with said first tool (8).

16. Apparatus for applying and modelling seal members constituted of an extruded material onto surfaces of flat or curved sheets according to any of claims 5 to 15, wherein said surface conditioning means (14, 15, 19, 20) comprises:
at least one generator (14) of a flow of cold and/or hot air, apt to ensure that a flow of cold and/or hot air generated hits the surface of at least one of said modelling means (8, 13);
at least one liquid atomiser (15), said liquid being preferably water;
at least one distribution pipe (19) connected to the generator (14) and to the atomiser (15) for the supply of the latter; and
at least one device for regulating the supply to said generator (14) and atomiser (15) and connected to the pipe (19).

17. Apparatus for applying and modelling seal members constituted of an extruded material onto surfaces of flat or curved sheets according to any of claims 5-16, wherein said flat or curved sheets (3) are flat or curved windowpanes.

18. Apparatus for applying and modelling seal members constituted of an extruded material onto surfaces of flat or curved sheets according to the preceding claim 17, wherein said windowpanes are windows for automobiles.

19. Apparatus for applying and modelling seal members constituted of an extruded material onto surfaces of flat or curved sheets according to at least one of claims 5 to 18, wherein said extruded seal member (2) consists of at least one single-component polyurethane pre-polymer.

## Patentansprüche

1. Verfahren zum Auftragen und Formen von Dichtungselementen, die aus einem extrudierten Material bestehen, auf Oberflächen planer oder gekrümmter Platten, **dadurch gekennzeichnet, dass** es die folgenden Schritte umfasst:
Positionieren einer Platte (3), die mit einem Dichtungselement versehen werden soll, in der Nähe einer Dichtungselement-Extrudiervorrichtung (1,16);
Positionieren der Extrudiervorrichtung (1,16) über der Platte (3);
Extrudieren eines Dichtungselementes (2) aus polymerisierendem Material und kontinuierliches Aufbringen desselben auf den Abschnitt der Platte (3), der abgedichtet werden soll;
Schneiden des Dichtungselementes (2) aus extrudiertem Material nach dem Extrudieren desselben und vor dem Aufbringen desselben auf die Platte (3) und in jedem Fall vor der Polymerisation desselben unter Verwendung einer Schneideinrichtung (5,6,7,9,10); und
Zusammenfügen und festes Verbinden des Anfangs- und des Abschlussendes des extrudierten Dichtungselementes (2) miteinander auf der Platte (3), so dass ein Ende an dem anderen anstößt, unter Verwendung einer Formeinrichtung (8,13).

2. Verfahren zum Auftragen und Formen von Dichtungselementen, die aus einem extrudierten Material bestehen, auf Oberflächen planer oder gekrümmter Platten nach Anspruch 1, wobei die planen oder gekrümmten Platten (3) plane oder gekrümmte Fensterscheiben sind.

3. Verfahren zum Auftragen und Formen von Dichtungselementen, die aus einem extrudierten Material bestehen, auf Oberflächen planer oder gekrümmter Platten nach Anspruch 2, wobei die Fensterscheiben Fensterscheiben für Kraftfahrzeuge sind.

4. Verfahren zum Auftragen und Formen von Dichtungselementen, die aus einem extrudierten Material bestehen, auf Oberflächen planer oder gekrümmter Platten nach wenigstens einem der vorangehenden Ansprüche, wobei das extrudierte Dichtungselement (2) aus wenigstens einem Einkomponenten-Polyurethan-Vorpolymer besteht.

5. Vorrichtung zum Auftragen und Formen von Dichtungselementen, die aus einem extrudierten Material bestehen, auf Oberflächen planer oder gekrümmter Platten, **dadurch gekennzeichnet, dass** sie umfasst:
wenigstens eine Dichtungselement-Extrudiervorrichtung zum Extrudieren von polymerisierendem Material (1,16);
eine Einrichtung (18), mit der die Platte (3), die mit dem Dichtungselement versehen werden soll, in der Nähe der Extrudiervorrichtung positioniert und getragen wird;
eine Schneideinrichtung (5,6,7,9,10), mit der das extrudierte polymerisierende Material nach dem Extrudieren desselben und vor dem Aufbringen desselben auf die Platte (3) und in jedem Fall vor der Polymerisation desselben geschnitten wird;
Formeinrichtungen (8,13), mit denen das entsprechende Anfangs- und das Abschlussende des extrudierten Dichtungselementes (2) auf der Platte (3) zusammengefügt und fest miteinander verbunden werden, so dass ein Ende an dem anderen anstößt;
eine Einrichtung (14,15,19,20), mit der die Oberfläche der Formeinrichtungen (8,13) konditioniert wird.

6. Vorrichtung zum Auftragen und Formen von Dichtungselementen, die aus einem extrudierten Material bestehen, auf Oberflächen planer oder gekrümmter Platten nach Anspruch 5, wobei die Dichtungselement-Extrudiervorrichtung wenigstens eine Extrudierdüse (1) umfasst, die an wenigstens einem mechanischen Roboterarm (16) angebracht ist.

7. Vorrichtung zum Auftragen und Formen von Dichtungselementen, die aus einem extrudierten Material bestehen, auf Oberflächen planer oder gekrümmter Platten nach Anspruch 5 oder 6, wobei die Plattentrageeinrichtung wenigstens ein bewegliches Gestell (18) umfasst, das die darauf aufgelegte Platte abnehmbar tragen kann.

8. Vorrichtung zum Auftragen und Formen von Dichtungselementen, die aus einem extrudierten Material bestehen, auf Oberflächen planer oder gekrümmter Platten nach den Ansprüchen 5 - 7, wobei die Schneideinrichtung umfasst:
eine Elektroenergiequelle (4);
ein Übertragungselement (5), das die Energie von der Quelle (4) überträgt und abnehmbar an dem mechanischen Roboterarm (16) angeordnet ist; und
ein Werkzeug (7), dessen eines Ende die Form einer Klinge hat und das mit dem Übertragungselement (5) verbunden ist,
und wobei die Schneideinrichtung des Weiteren einen mechanischen Schwingungsverstärker (6) umfasst, der mit dem Übertragungselement (5) verbunden ist.

9. Vorrichtung zum Auftragen und Formen von Dichtungselementen, die aus einem extrudierten Material bestehen, auf Oberflächen planer oder gekrümmter Platten nach Anspruch 8, wobei die Energiequelle ein Generator (4) verstärkter schwingender elektrischer Signale ist.

10. Vorrichtung zum Auftragen und Formen von Dichtungselementen, die aus einem extrudierten Material bestehen, auf Oberflächen planer oder gekrümmter Platten nach den Ansprüchen 8, 9, wobei die Übertragungseinrichtung (5) ein Wandler ist, der die elektrischen Signale von dem Generator (4) in mechanische Schwingungen einer Welle (5a) umwandelt, mit der er verbunden ist.

11. Vorrichtung zum Auftragen und Formen von Dichtungselementen, die aus einem extrudierten Material bestehen, auf Oberflächen planer oder gekrümmter Platten nach den Ansprüchen 5 - 7, wobei die Schneideinrichtung umfasst:
ein Schneidelement, das aus einem Metalldraht (9) besteht, der erhitzt werden kann;
ein Trageelement (10), das den Metalldraht trägt;
eine Energiezufuhr (11), die mit dem Metalldraht verbunden ist und den Metalldraht (9) erhitzen kann; und
eine Vorrichtung (12), die das Trageelement (10) bewegt und an dem mechanischen Roboterarm (16) angeordnet ist.

12. Vorrichtung zum Auftragen und Formen von Dichtungselementen, die aus einem extrudierten Material bestehen, auf Oberflächen planer oder gekrümmter Platten nach dem vorangehenden Anspruch 11, wobei die Energiezufuhr eine Elektroenergiequelle (11) ist.

13. Vorrichtung zum Auftragen und Formen von Dichtungselementen, die aus einem extrudierten Material bestehen, auf Oberflächen planer oder gekrümmter Platten nach Anspruch 11 oder 12, wobei die Bewegungseinrichtung (12) aus wenigstens einer der folgenden Vorrichtungen besteht:
einem elektrischen Stellglied;
einem pneumatischen Stellglied;
einem hydraulischen Stellglied.

14. Vorrichtung zum Auftragen und Formen von Dichtungselementen, die aus einem extrudierten Material bestehen, auf Oberflächen planer oder gekrümmter Platten nach einem der Ansprüche 8 bis 13, wobei die Formeinrichtungen ein erstes Werkzeug (8) mit einer unteren Fläche (8a) umfassen, die die gleiche Form hat wie der Abschnitt des Dichtungselementes (2), der geformt werden soll, und mit der auf den Abschnitt des Dichtungselementes (2) gedrückt wird, und das Werkzeug (8) auf lösbare Weise mit dem mechanischen Verstärker (6) verbunden werden kann.

15. Vorrichtung zum Auftragen und Formen von Dichtungselementen, die aus einem extrudierten Material bestehen, auf Oberflächen planer oder gekrümmter Platten nach dem vorangehenden Anspruch, wobei die Formeinrichtungen ein zweites Werkzeug (13) umfassen, das eine Fläche aufweist, die wie der Umfangsrand des Dichtungselementes (2) geformt ist und drehbar an dem beweglichen Gestell (18) angebracht ist, wobei das zweite Werkzeug (13) auf den Abschnitt des Dichtungselementes (2), der geformt werden soll, an der Unterseite und/oder der Seite desselben drücken kann, wenn es mit dem ersten Werkzeug (8) zusammenwirkt.

16. Vorrichtung zum Auftragen und Formen von Dichtungselementen, die aus einem extrudierten Material bestehen, auf Oberflächen planer oder gekrümmter Platten nach einem der Ansprüche 5 bis 15, wobei die Einrichtung (14,15,19,20) zum Konditionieren der Oberfläche umfasst:
wenigstens eine Einrichtung (14) zum Erzeugen eines Stroms kalter und/oder heißer Luft, mit der gewährleistet werden kann, dass der erzeugte Strom kalter und/oder heißer Luft auf die Oberfläche wenigstens einer der Formeinrichtungen (8,13) auftrifft;
wenigstens einen Flüssigkeitszerstäuber (15), wobei es sich bei der Flüssigkeit vorzugsweise um Wasser handelt;
wenigstens ein Verteilungsrohr (19), das mit der Erzeugungseinrichtung (14) und dem Zerstäuber (15) verbunden ist, um letzteren zu speisen; und
wenigstens eine Vorrichtung zum Regulieren der Speisung der Erzeugungseinrichtung (14) und des Zerstäubers (15), die mit dem Rohr (19) verbunden ist.

17. Vorrichtung zum Auftragen und Formen von Dichtungselementen, die aus einem extrudierten Material bestehen, auf Oberflächen planer oder gekrümmter Platten nach einem der Ansprüche 5 - 16, wobei die planen oder gekrümmten Platten (3) plane oder gekrümmte Fensterscheiben sind.

18. Vorrichtung zum Auftragen und Formen von Dichtungselementen, die aus einem extrudierten Material bestehen, auf Oberflächen planer oder gekrümmter Platten nach dem vorangehenden Anspruch 17, wobei die Fensterscheiben Fenster für Kraftfahrzeuge sind.

19. Vorrichtung zum Auftragen und Formen von Dichtungselementen, die aus einem extrudierten Material bestehen, auf Oberflächen planer oder gekrümmter Platten nach wenigstens einem der Ansprüche 5 bis 18, wobei das extrudierte Dichtungselement (2) aus wenigstens einem Einkomponenten-Polyurethan-Vorpolymer besteht.

## Revendications

1. Procédé pour appliquer et modeler des éléments d'étanchéité formés d'un matériau extrudé, sur des surfaces de feuilles plates ou courbes, **caractérisé en ce qu'**il comprend les étapes suivantes consistant à:
positionner une feuille (3) devant être équipée d'un joint d'étanchéité à proximité d'un dispositif (1, 16) d'extrusion de l'élément d'étanchéité;
positionner ledit dispositif d'extrusion (1, 16) au-dessus de la feuille (3);
extruder un élément d'étanchéité (2) formé d'un matériau polymérisable et le déposer d'une manière continue sur la partie de la feuille (3) qui doit être scellée de façon étanche;
découper ledit élément d'étanchéité (2) formé du matériau extrudé à la suite de son extrusion et avant son dépôt sur la feuille (3) et, en tout cas, avant que sa polymérisation se produise, moyennant l'utilisation de moyens de coupe (5, 6, 7, 8, 10); et
réunir et rendre solidaire l'une de l'autre les extrémités initiale et finale respectives de l'élément d'étanchéité extrudé (2) sur la feuille (3), de sorte qu'une extrémité est en aboutement contre l'autre, moyennant l'utilisation de moyens de modelage (8, 13).

2. Procédé pour appliquer et modeler des éléments d'étanchéité formés d'un matériau extrudé, sur des surfaces de feuilles plates ou courbes selon la revendication 1, selon lequel lesdites feuilles plates ou courbes (3) sont des vitres plates ou courbes.

3. Procédé pour appliquer et modeler lesdits éléments d'étanchéité réalisés en un matériau extrudé, sur des surfaces de feuilles plates ou courbes selon la revendication 2, selon lequel lesdites vitres sont des vitres pour automobiles.

4. Procédé pour appliquer et modeler des éléments d'étanchéité formés d'un matériau extrudé, sur des surfaces de feuilles planes ou courbes selon au moins l'une des revendications précédentes, selon lequel ledit élément d'étanchéité extrudé (2) est formé d'au moins un prépolymère de polyuréthane à un seul constituant.

5. Dispositif pour appliquer et modeler des éléments d'étanchéité formés d'un matériau extrudé, sur des surfaces de feuilles plates ou courbes **caractérisé en ce qu'**il comprend:
au moins un dispositif d'extrusion d'un élément d'étanchéité servant à extruder un matériau polymérisable (1, 16);
des moyens (18) pour positionner et supporter la feuille (3) devant être équipée dudit élément d'étanchéité, à proximité dudit dispositif d'extrusion;
des moyens de coupe (5, 6, 7, 8, 9, 10) pour découper ledit matériau polymérisable extrudé à la suite de son extrusion et avant son dépôt sur la feuille (3) et, en tout cas, avant que sa polymérisation se produise;
des moyens de modelage (8, 13) pour réunir et rendre solidaires l'une de l'autre les extrémités initiale et
finale respectives de l'élément d'étanchéité extrudé (2) sur la feuille (3) de sorte qu'une extrémité est en aboutement contre l'autre;
des moyens (14, 15, 19, 20) pour le conditionnement de surface desdits moyens de modelage (8, 13).

6. Dispositif pour appliquer et modeler des éléments d'étanchéité formés d'un matériau extrudé, sur des surfaces de feuilles plates ou courbes selon la revendication 5, selon lequel ledit dispositif d'extrusion de l'élément d'étanchéité comprend au moins une buse d'extrusion (1) montée sur au moins un bras de robot mécanique (16).

7. Dispositif pour appliquer et modéliser des éléments d'étanchéité formé d'un matériau extrudé sur des surfaces de feuilles plates ou courbes selon la revendication 5 ou 6, dans lequel lesdits moyens de support des feuilles comprennent au moins un cadre mobile. (18) apte à supporter, d'une manière amovible, la feuille déposée sur ce cadre.

8. Dispositif pour appliquer et modeler des éléments d'étanchéité formés d'un matériau extrudé, sur des surfaces de feuilles plates ou courbes selon les revendications 5-7, selon lequel lesdits moyens de coupe comprennent :
une source de puissance électrique (4) ;
un élément de transmission (5) pour transmettre la puissance à partir de ladite source (4) montée de façon amovible sur le bras de robot mécanique (16); et
un outil (7) dont une extrémité possède la forme d'une lame et est raccordée à l'élément de transmission (5),
et dans lequel lesdits moyens de coupe comprennent en outre un amplificateur d'oscillation mécanique (6) raccordé audit élément de transmission (5).

9. Dispositif pour appliquer et modeler des éléments d'étanchéité formés d'un matériau extrudé, sur des surfaces de feuilles plates ou courbes selon la revendication 8, dans lequel ladite source de puissance est un générateur (4) de signaux électriques oscillants amplifiés.

10. Dispositif pour appliquer et modeler lesdits éléments d'étanchéité formés d'un matériau extrudé, sur des surfaces de feuilles plates ou courbes selon les revendications 8, 9, dans lequel ledit dispositif de transmission (5) est un transducteur servant à transformer lesdits signaux électriques délivrés par le générateur (4) en des vibrations mécaniques d'un arbre (5a), auquel il est raccordé.

11. Dispositif pour appliquer et modeler lesdits éléments d'étanchéité formés d'un matériau extrudé, sur des surfaces de feuilles plates ou courbes selon la revendications 5-7, dans lequel lesdits moyens de coupe comprennent:
un élément de coupe formé d'un fil métallique (9) apte à être chauffé;
un élément de support (10) servant à supporter ledit fil métallique;
une source d'alimentation (11) raccordée audit fil métallique et apte à chauffer le fil métallique (9); et
un dispositif (12) pour déplacer ledit élément de support (10), disposé sur ledit bras de robot mécanique (16).

12. Dispositif pour appliquer et modeler des éléments d'étanchéité formés d'un matériau extrudé, sur des surfaces de feuilles plates ou courbes selon la revendication précédente, dans lequel ladite source d'alimentation est une source d'alimentation électrique (11).

13. Dispositif pour appliquer et modeler des éléments d'étanchéité formés d'un matériau extrudé, sur des surfaces de feuilles plates ou courbes selon la revendication 11 ou 12, dans lequel ledit dispositif mobile (12) est constitué par au moins l'un des dispositifs suivants:
un actionneur électrique;
un actionneur pneumatique;
un actionneur hydraulique.

14. Dispositif pour appliquer et modeler des éléments d'étanchéité formés d'un matériau extrudé, sur des surfaces de feuilles plates ou courbes selon l'une quelconque des revendications 8 à 13, dans lequel lesdits éléments de modelage comprennent un premier outil (8) possédant une surface inférieure (8a) ayant la même forme que la partie de l'élément d'étanchéité (2) devant être modelé et servant à repousser ladite partie de l'élément d'étanchéité (2), ledit outil étant approprié pour être raccordé d'une manière amovible à l'amplificateur mécanique (6).

15. Dispositif pour appliquer et modeler des éléments d'étanchéité formés d'un matériau extrudé, sur des surfaces de feuilles plates ou courbes selon la revendication précédente, dans lequel lesdits moyens de modelage comprennent un second outil (13) possédant une surface conformée à la manière du bord extérieur dudit élément d'étanchéité (2) et monté de manière à pouvoir tourner sur ledit cadre mobile (18), ledit second outil (13) étant à même de comprimer la partie de l'élément d'étanchéité (2) devant être modelé au niveau de sa base inférieure et/ou au niveau de son côté, tout en coopérant avec ledit premier outil (8).

16. Dispositif pour appliquer et modeler des éléments d'étanchéité formés d'un matériau extrudé, sur des surfaces de feuilles plates ou courbes selon l'une quelconque des revendications 5 à 15, dans lequel lesdits moyens de conditionnement de surface (14, 15, 19, 20) comprennent:
au moins un générateur (14) d'un courant d'air froid et/ou d'air chaud, apte à garantir qu'un courant d'air froid et/ou un courant d'air chaud chauffe la surface d'au moins l'un des deux moyens de modelage (8,13);
au moins un atomiseur de liquide (15), ledit liquide étant de préférence de l'eau;
au moins une canalisation de distribution (19) raccordée au générateur (14) et à l'atomiseur (15) pour l'alimentation de ce dernier; et
au moins un dispositif pour régler l'alimentation envoyée audit générateur (14) et à l'atomiseur (15) et raccordé à la canalisation (19).

17. Dispositif pour appliquer et modeler lesdits éléments d'étanchéité formés d'un matériau extrudé, sur des surfaces de feuilles plates ou courbes selon l'une quelconque des revendications 5-16, lesdites feuilles plates ou courbes (3) sont des vitres plates ou courbes.

18. Dispositif pour appliquer et modeler les éléments d'étanchéité formés d'un matériau extrudé, sur des surfaces de feuilles plates ou courbes selon la revendication précédente 17, dans lequel lesdites vitres sont des vitres pour automobiles.

19. Dispositif pour appliquer et modeler les éléments d'étanchéité formés d'un matériau extrudé, sur des surfaces de feuilles plates ou courbes selon au moins l'une des revendications 5 à 18, dans lequel ledit élément d'étanchéité extrudé (2) est constitué par au moins un prépolymère de polyuréthane à un seul constituant.
